Europäisches Patentamt

European Patent Office

Office européen des brevets

(19)

(11) Veröffentlichungsnummer: **0 036 515**
**B1**

(12) # EUROPÄISCHE PATENTSCHRIFT

(45) Veröffentlichungstag der Patentschrift:
**31.10.84**

(21) Anmeldenummer: **81101504.9**

(22) Anmeldetag: **03.03.81**

(51) Int. Cl.³: **C 08 L 21/00** // (C08L21/00, 61/06, 61/20)

(54) Verfahren zur Herstellung von verstärkten Kautschukvulkanisaten.

(30) Priorität: **15.03.80 DE 3010001**

(43) Veröffentlichungstag der Anmeldung:
**30.09.81 Patentblatt 81/39**

(45) Bekanntmachung des Hinweises auf die Patenterteilung:
**31.10.84 Patentblatt 84/44**

(84) Benannte Vertragsstaaten:
**AT BE CH FR GB IT LI LU NL SE**

(56) Entgegenhaltungen:
**EP - A - 0 013 330**
**DE - B - 1 301 052**
**FR - A - 2 223 391**
**GB - A - 941 384**
**GB - A - 1 163 594**
**GB - A - 1 230 814**
**LU - A - 58 029**

(73) Patentinhaber: **HOECHST AKTIENGESELLSCHAFT, Postfach 80 03 20, D-6230 Frankfurt am Main 80 (DE)**

(72) Erfinder: **Giller, Arnold, Dr., Fleckenbornstrasse 25, D-6204 Taunusstein (DE)**
Erfinder: **Weil, Joachim, Weidenstrasse 11, D-6200 Wiesbaden (DE)**

**Beschreibung**

Aus der veröffentlichten europäischen Patentanmeldung 13 330 ist es bekannt, verstärkte Vulkanisate durch Vulkanisation von Mischungen aus Naturkautschuk oder synthetischem Dienkautschuk mit Novolakharzen in Gegenwart reaktiver Melaminharze, die durch Umsetzung von 1 Mol Melamin mit 0,5 bis 6 Mol Aldehyd erhalten worden sind, als Härter in einem Anteil von 0,5 bis 120 Gew.-%, bezogen auf Novolakharz, herzustellen, wobei die phenolische Komponente des Novolakharzes aus der Gruppe Phenol, mehrwertige Mehrkernphenole, Alkylphenole, Gemische von Alkylphenolen mit Phenol ausgewählt ist und noch Zusätze von Resorcin, Phenylphenol oder Polyalkyl-phenolen enthalten kann. Dieselbe Druckschrift beschreibt auch die Verwendung der nach diesem Verfahren hergestellten Vulkanisate zur Herstellung von technischen Gummiartikeln und Kraftfahrzeugreifen.

Aus der DE-B 1 301 052 ist ein Verfahren zum haftfesten Verbinden von Textilien mit Kautschuk bekannt, bei dem u. a. ein teilweise kondensiertes Resorcin-Formaldehyd-Harz und als weitere Kunstharze bildende Komponente N,N'-Dimethylolharnstoff verwendet wird. Die FR-A 2 223 391 beschreibt ebenfalls die Verstärkung von Kautschukmischungen mittels reiner Resorcinharze, die mit Di- bis Hexamethylolmelaminen, ihren vollständig oder teilweise verätherten oder veresterten Derivaten oder Hexamethylentetramin kombiniert werden können.

Es wurde nun gefunden, daß man bei einem Verfahren zur Herstellung von verstärkten Vulkanisaten durch Vulkanisation von Mischungen aus Naturkautschuk oder synthetischem Dienkautschuk mit Novolakharzen in Gegenwart reaktiver Melaminharze, die als Härter für das Novolakharz wirken und durch Umsetzung von Melamin mit 0,5 bis 6 Mol Aldehyd erhalten worden sind, in einem Anteil von 0,5 bis 120 Gew.-%, bezogen auf Novolakharz, ebenfalls verstärkte Kautschukvulkanisate mit guten Eigenschaften, insbesondere einem hohen Verstärkungseffekt erhalten kann, wenn man gemäß der Erfindung anstelle von oder zusammen mit den genannten reaktiven Melaminharzen andere hyroxylgruppenhaltige aminoplastbildende Verbindungen verwendet, wobei der Gesamtmenge der aminoplastbildenden Verbindungen ebenfalls von 0,5 bis 120 Gew.-%, bezogen auf das Novolakharz, beträgt und wobei das Novolakharz im wesentlichen aus Phenol, Bisphenolen, Gemischen aus Phenol und Alkylphenolen oder solchen Phenolen, die eine Alkylgruppe mit 2 bis 12 C-Atomen tragen, und Aldehyden aufgebaut ist, wobei die Phenolkomponente noch Zusätze von Resorcin, Phenylphenol oder Polyalkylphenolen in einer solchen Menge erhalten kann, daß das Molverhältnis der Gesamtmenge dieser Zusätze zur Gesamtmenge der anderen Phenole bis 1 : 1, vorteilhaft bis 1 : 2 beträgt und wobei die Novolakharze auch mit Naturharzsäuren oder olefinischungesättigten Kohlenwasserstoffen modifiziert sein können. Dieses neue Verfahren unterscheidet sich auch von der LU-A 58 092, die die Verarbeitung einer Kombination verschiedener Kautschukarten mit einem Methylen-Donator, einem Methylen-Akzeptor und Schwefel beschreibt. Als Methylen-Donatoren kommen zwar die gleichen aminoplastbildenden Komponenten infrage wie nach der vorliegenden Erfindung, jedoch sind die Methylen-Akzeptoren verschieden. Im Gegensatz zu Resorcin und zahlreichen anderen in der LU-A 58 029 genannten Verbindungen werden nach der vorliegenden Erfindung Novolake verwendet. Die einzigen Phenolharze, auf die in der Entgegenhaltung Bezug genommen wird, sind Umsetzungsprodukte von α- und β-Naphthol, die durch partielle Umsetzung mit Formaldehyd erhalten worden sind. Derartige Umsetzungsprodukte kommen nach der vorliegenden Erfindung nicht in Betracht.

Als andere hydroxylgruppenhaltige aminoplastbildende Verbindungen kommen beispielsweise in Frage Polymethylolharnstoffe, Mischkondensate aus Melamin, Harnstoff bzw. anderen aminoplastbildenden Verbindungen und Formaldehyd, und Produkte, die durch Umsetzung von Melamin mit mehr als 6 Mol, z. B. 8 Mol Aldehyd, vorzugsweise Formaldehyd, erhalten wurden, bzw. die Äther, vorzugsweise Methyläther aller dieser Produkte. Geeignet sind also z. B. auch solche Produkte, in denen an einen Teil der NH-Bindungen des Melamins mehr als ein Mol Formaldehyd angelagert ist, und die unverätherten oder verätherten Methylolverbindungen der zugänglichen Guanamine wie Aceto-, Benzo- oder Formoguanamin. Ein derartiges Produkt ist z. B. das Tetramethoxymethylbenzoguanamin, das in fester Form anfällt.

Als aminoplastbildende Verbindungen kommen vorzugsweise solche in Frage, die durch Umsetzung von 1 Mol Harnstoff mit 2 bis 4 Mol Formaldehyd erhalten werden.

Im Hinblick auf die Verträglichkeit mit Kautschuk sind Verbindungen besonders bevorzugt, deren Methylolgruppen zumindest teilweise durch Umsetzung mit einwertigen Alkoholen mit 1 bis 12, vorzugsweise 1 bis 8 C-Atomen, wie Methanol, Äthanol, den verschiedenen Propanolen und Butanolen, Äthylhexylalkohol, n-Octanol, Nonanol und Dodecylalkohol veräthert sind.

Ganz besonders eignen sich in einem Zweistufenverfahren hergestellte flüssige verätherte, hochmethylolierte Harnstoffderivate, wie man sie erhält, wenn man in einer ersten Stufe 1 Mol Harnstoff mit mehr als 6 Mol Formaldehyd bei pH-Werten über 8 und Temperaturen von 45 bis 70° C umsetzt und das Umsetzungsprodukt in einer zweiten Stufe mit weiterem Harnstoff umsetzt, so daß auf die gesamte Molmenge des Formaldehyds, vermindert um 4 Mol, zusätzlich 25 Mol-% Harnstoff verwendet werden. Zur Herstellung der Äther wird das Reaktionsgemisch bevorzugt mit einwertigen aliphatischen Alkoholen, z. B. den obengenannten, nach üblichen Methoden im sauren Bereich und bei Temperaturen nicht über 50° C weiter umgesetzt.

Das Reaktionsprodukt wird vorteilhaft auf Wassergehalte von nicht über 5%, bevorzugt unter 1%, eingestellt.

Als Melaminharze, die in Kombination mit den anderen Aminharzen verwendet werden können, kommen solche in Frage, wie sie durch Umsetzung von Melamin mit 0,5 bis 6 Mol Aldehyd, vorzugsweise Formaldehyd, erhalten werden können. Bevorzugt sind Hexamethoxymethylmelamin oder entsprechende höherkondensierte mehrkernige Produkte oder zumindest teilweise verätherte Trimethylol-, Tetramethylol- oder Pentamethylol-Melaminharze. Der Kondensationsgrad aller Aldehyd-, insbesondere Formaldehyd-Harze und ihr Gehalt an freien Alkylol-, insbesondere Methylolgruppen, kann in üblicher Weise durch entsprechende Einstellung des Reaktionsmediums geregelt werden.

Die erfindungsgemäß verwendeten aminoplastbildenden Verbindungen können unter den Bedingungen der Vulkanisation die in der Kautschukmischung enthaltenen Novolake aushärten. Soweit Gemische mit den in der europäischen Anmeldung 13 330 genannten Melaminharzen bzw. Mischkondensate mit Melamin verwendet werden, beträgt das Gewichtsverhältnis Harnstoff zu Melamin bei der Umsetzung mit Aldehyd vorteilhaft wenigstens 1 : 1. Darüber hinaus hat die Verwendung der erfindungsgemäßen Aminharze den Vorteil, daß die Vulkanisate an Metall, z. B. metallischen Verstärkungselementen, eine verbesserte Haftung zeigen.

Als Novolake kommen solche in Betracht, deren phenolische Komponente im wesentlichen aus Phenol, Bisphenol, z. B. Diphenylolpropan oder Diphenylolmethan bzw. deren Homologen, oder Gemischen aus Phenol und Alkylphenolen, wie tert.-Butylphenol, Octylphenol oder Nonylphenol besteht und die durch Kondensation mit Aldehyden, vorzugsweise Formaldehyd, im sauren Gebiet, erhalten werden. Die Phenolkomponente kann noch Zusätze von Resorcin, Phenylphenol oder Polyalkylphenolen enthalten. Diese Zusätze können in einer solchen Menge eingearbeitet werden, daß das Molverhältnis der Gesamtmenge dieser Zusätze zur Gesamtmenge der anderen Phenole bis 1 : 1, vorteilhaft bis 1 : 2 beträgt.

Die Novolake können außerdem weichmachende Anteile, wie Polyäthylenglykol, Kolophonium, Tallöl oder andere geeignete Plastifiziermittel enthalten bzw. mit Naturharzsäuren oder olefinisch ungesättigten Kohlenwasserstoffen wie Styrol modifiziert sein. Grundsätzlich können auch Novolakharze verwendet werden, die ausschließlich aus Alkylphenolen, die eine Alkylgruppe von 2 bis 12 C-Atomen tragen, hergestellt sind. Diese kommen jedoch nur bedingt in Frage, da sie weniger härtbar sind. Für den praktischen Gebrauch sind Novolakharze aus Phenol und Gemischen aus Phenol und Cashew-Nußschalenöl sowie aus Phenol und Alkylphenolen mit 4 bis 12 C-Atomen im Alkylteil, insbesondere p-tert.Butyl-, Octyl- oder Nonylphenol, bevorzugt. Der Anteil der substituierten Phenole im Novolak kann dabei variieren, wobei jedoch der Novolak noch härtbar sein soll. So wird man im allgemeinen einen Anteil an Alkylphenol von höchstens 70 Mol-% der gesamten Phenolkomponente wählen.

Der Anteil des Novolaks beträgt in der Regel 1 bis 30, vorzugsweise 3 bis 20 Gew.-%, bezogen auf Kautschuk. In Einzelfällen lassen sich auch größere Mengen, z. B. 100 und mehr Gew.-%, bezogen auf Kautschuk, verwenden. Bei einem derart hohen Novolakanteil erhält man harte Produkte, die sich in ihren Eigenschaften wesentlich von den üblichen hochelastischen Kautschukvulkanisaten unterscheiden.

Die zur Härtung der Novolakharze erforderlichen optimalen Mengen der aminoplastbildenden Verbindungen müssen im Prinzip in Vorversuchen, die einfach durchzuführen sind, ermittelt werden. Im allgemeinen sind auf 100 Gewichtsteile Novolakharz 1 bis 80, vorzugsweise 2 bis 50 Gew.-% aminoplastbildende Verbindungen erforderlich.

Bei dem erfindungsgemäßen Verfahren können auch feste, pulverförmige Produkte wie Methylolaminoplastverbindungen eingesetzt werden. In diesem Falle hängt deren Effekt in entscheidendem Maße von der Feinheit ihrer Teilchen ab, wobei man in der Regel Produkt mit einer Teilchengröße von höchstens 100 μm, vorzugsweise höchstens 50 μm, verwendet. Derartige Produkte lassen sich verhältnismäßig leicht in gelöster Form herstellen. Diese Typen sind aber nur bedingt zur Einarbeitung in Kautschuke geeignet, weil sie mit üblichen niedrig siedenden Lösungsmitteln wie höheren Alkoholen, Wasser oder Estern eingearbeitet werden müßten, die im Zuge des Einmischverfahrens verdampfen. Hingegen können z. B. gewisse Polyglykole oder ölige aromatische oder aliphatische Kohlenwasserstoffe oder hochsiedende Polyäther mitverwendet werden.

Häufig ist es vorteilhaft, die Aktivität der erfindungsgemäß vorgeschlagenen aminoplastbildenden Verbindungen noch durch den Zusatz geeigneter Säuren zu verstärken bzw. zu beschleunigen. Als solche Säuren, die zusätzlich zu den üblicherweise als Verarbeitungshilfsmittel angewendeten Fettsäuren wie Stearinsäure verwendet werden, kommen ein- oder mehrbasische organische Säuren mit mindestens 2 und höchstens 20 C-Atomen in betracht bzw. deren Anhydride, z. B. Phthalsäure, Benzoesäure, Maleinsäure, Furmarsäure, Tri- oder Pyromellithsäure und deren Anhydride oder Sulfonsäuren wie Naphthalindisulfonsäure oder Sulfanilsäure.

Anstelle von oder zusammen mit den organischen Säuren können auch Polyesterharze aus Polycarbonsäure und mehrwertigen Alkoholen mit einer Säurezahl von 20 und höher, z. B. bis 100, die auch durch Monocarbonsäuren und einwertige Alkohole modifiziert sein können, mitverwendet werden. Der Anteil der einwertigen Komponenten soll jedoch höchstens 25 Äquivalent-%, bezogen auf die Säure- bzw. Alkohol-Komponente, ausmachen.

Die zur Beschleunigung dienenden organischen Säuren bzw. Polyesterharze können in Mengen von 0,1 bis 5, vorzugsweise 1,5 bis 3 Gew.-%, bezogen auf Kautschuk, zugesetzt werden. Größere oder kleinere Säuredosierungen sind aber durchaus möglich, um eine gezielte Veränderung der Aktivität zu bewirken.

An sich kann die Beschleunigung der Härtung auch mit Hilfe von starken anorganischen Säuren, wie Phosphorsäure oder sauren Phosphorsäureestern, erreicht werden. Diese Arbeitsweise ist jedoch wegen der im Umgang mit solchen Säuren erforderlichen Vorsichtsmaßnahmen weniger zweckmäßig. Durch die Mitverwendung der Säuren läßt sich vielfach ein intensiverer Verstärkungseffekt erzielen als ohne deren Mitverwendung. Diese Verstärkungseffekte zeigen sich bei den erfindungsgemäß hergestellten Vulkanisaten insbesondere in einer Steigerung der Spannungswerte bei 100% Dehnung sowie in einer Steigerung der Vulkanisathärte.

Es ist auch möglich, anstelle von oder zusammen mit den Säuren auch Weichmacher, wie sie bei der Kautschukverarbeitung üblich sind, zuzugeben, beispielsweise aromatische Polyäther, Phthalsäureester oder dergleichen.

Geeignete Kautschuktypen sind beispielsweise Naturkautschuk, Polyisopren, Styrolkautschuk, Acrylnitrilkautschuk, Polybutadien, Butylkautschuk, Äthylen-Propylen-Dien-Terpolymer-Kautschuk oder deren Gemische, wie sie üblicherweise in der Reifenindustrie oder zur Herstellung technischer Gummiwaren verwendet werden.

Als Füllstoffe können die handelsüblichen aktiven oder inaktiven Ruße, Kieselsäure, Kaoline, Kreide oder andere übliche Füllstoffe mitverwendet werden.

Zur Vulkanisation wird in der Regel Schwefel zusammen mit den bekannten Beschleunigern verwendet. In manchen Fällen kann jedoch auch ohne Schwefel gearbeitet werden. Die Vulkanisation in Gegenwart von Schwefel ist aber bevorzugt. Der Vulkanisationsverlauf kann durch Auswahl geeigneter in der Kautschuktechnologie üblicher Beschleuniger den praktischen Erfordernissen angepaßt werden.

Die nach der Erfindung aufgebauten Mischungen werden in üblicher Weise in Innenmischern oder auf Mischwalzen hergestellt. Beim Einarbeiten ist darauf zu achten, daß die Mischungstemperatur in irgendeiner Phase der Mischungsherstellung den Schmelzpunkt von schmelzbaren festen Stoffen, insbesondere der Novolakharze, überschreitet, damit sich diese völlig verteilen können. Ferner ist wichtig, daß die erfindungsgemäß als Härtungsmittel vorgeschlagenen aminoplastbildenden Verbindungen so eingearbeitet werden, daß es nicht zu einer vorzeitigen Eigenkondensation oder zu einer vorzeitigen Reaktion mit dem zu härtenden Novolak kommt. Es ist möglich, wenn sie am Ende des Mischvorgangs bei nicht zu hohen Temperaturen eingearbeitet werden. Die Temperatur richtet sich nach dem jeweils verwendeten Typ, der Säuremenge und der Zeit und liegt im allgemeinen bei 80° C bis 120° C und bevorzugt über 100° C. In Einzelfällen kann sie auch höher — z. B. in Abwesenheit einer Säure — oder auch tiefer sein. Es ist aber auch möglich, die Härtung der Novolakharze durch die erfindungsgemäß verwendeten aminoplastbildenden Verbindungen in einem getrennten Arbeitsgang durch Heißwalzen der Mischung vor Zugabe des Vulkanisationsbeschleunigers durchzuführen.

Durch das erfindungsgemäße Verfahren wird ein günstiger Verlauf der Härtung unter Mitwirkung der aminoplastbildenden Verbindungen bei der Vulkanisation erreicht.

Aus den nach der Erfindung hergestellten Mischungen können technische Gummiartikel, insbesondere solche mit metallischen Einlagen, hergestellt werden; sie können aber auch für die Herstellung von Kraftfahrzeugreifen verwendet werden.

In den nachstehenden Beispielen bedeuten die Mengenangaben Gewichtsteile.

Beispiele 1 bis 6

| Mischung | Vergleich | 1 | 2 | 3 | 4 | 5 | 6 |
|---|---|---|---|---|---|---|---|
| Styrol-Butadien-Kautschuk 1) | 100 | 100 | 100 | 100 | 100 | 100 | 100 |
| Ruß N-330 1) | 50 | 50 | 50 | 50 | 50 | 50 | 50 |
| Stearinsäure | 1,5 | 1,5 | 1,5 | 1,5 | 1,5 | 1,5 | 1,5 |
| Zinkoxyd | 5,0 | 5,0 | 5,0 | 5,0 | 5,0 | 5,0 | 5,0 |
| Alterungsschutzmittel | 2,0 | 2,0 | 2,0 | 2,0 | 2,0 | 2,0 | 2,0 |
| Schwefel | 2,0 | 2,0 | 2,0 | 2,0 | 2,0 | 2,0 | 2,0 |
| Phenolnovolak 2) | — | 14,0 | 14,0 | 14,0 | 14,0 | 14,0 | 14,0 |
| Melamin-Harnstoffmischäther A 3 | — | 6,0 | — | — | — | — | — |
| Melamin-Harnstoffmischäther B 4 | — | — | 6,0 | — | — | — | — |
| Melamin-Harnstoffmischäther C 5 | — | — | — | 6,0 | 6,0 | — | — |
| Harnstoffäther 6) | — | — | — | — | — | 6,0 | 6,0 |
| Benzoesäure | — | 3,0 | 3,0 | — | 3,0 | — | 3,0 |
| Cyclohexylaminothiobenzothiazol | 1,0 | 1,0 | 1,0 | 1,0 | 1,0 | 1,0 | 1,0 |
| Tetramethylthiurammonosulfid | 0,2 | 0,2 | 0,2 | 0,2 | 0,2 | 0,2 | 0,2 |
| Vulkanisation (°C) | 145 | 145 | 145 | 145 | 145 | 145 | 145 |
| Vulkanisation (min) | 30 | 30 | 30 | 30 | 30 | 30 | 30 |
| Zerreißfestigkeit (MPa) | 22,2 | 21,6 | 23,4 | 22,2 | 20,6 | 22,8 | 20,0 |
| Zerreißdehnung (%) | 251 | 293 | 312 | 327 | 283 | 315 | 265 |
| Spannungswerte bei 100% Dehnung (MPa) | 5,3 | 7,5 | 7,8 | 6,0 | 7,8 | 6,9 | 8,4 |
| Spannungswert bei 200% Dehnung (MPa) | 16,3 | 15,0 | 15,0 | 12,5 | 14,4 | 14,1 | 15,3 |
| Härte Shore A (°) | 74 | 91 | 92 | 88 | 90 | 88 | 92 |
| Rückprallelastizität (%) | 36 | 33 | 33 | 33 | 33 | 32 | 34 |

Beispiele 7 bis 10

| Mischung | 7 | 8 | 9 | 10 |
|---|---|---|---|---|
| Naturkautschuk 7) | 100 | 100 | 100 | 100 |
| Ruß N 330 8) | 50 | 50 | 50 | 50 |
| Stearinsäure | 2 | 2 | 2 | 2 |
| Zinkoxyd | 5 | 5 | 5 | 5 |
| Alterungsschutzmittel | 2 | 2 | 2 | 2 |
| Schwefel | 2,5 | 2,5 | 2,5 | 2,5 |
| Phenolnovolak 9) | 14 | 7 | 14 | 7 |
| Harnstoffäther 10) | 6 | 3 | — | — |
| Harnstoffäther 11) | — | — | 6 | 3 |
| Cyclohexylaminothiobenzothiazol | 0,7 | 0,7 | 0,7 | 0,7 |
| Tetramethylthiurammonosulfid | 0,2 | 0,2 | 0,2 | 0,2 |
| Benzoesäure | 1,0 | 0,5 | 1,0 | 0,5 |
| Vulkanisation (°C) | 145 | | 145 | |
| Vulkanisation (min) | 25 | | 25 | |
| Zerreißfestigkeit (MPa) | 18,8 | 25,0 | 15,3 | 21,3 |
| Zerreißdehnung (%) | 298 | 385 | 242 | 309 |
| Spannungswert b. 50% Dehnung (MPa) | 3,8 | 2,8 | 4,4 | 3,1 |
| Spannungswert b. 100% Dehnung (MPa) | 6,3 | 4,7 | 6,6 | 5,0 |
| Härte Shore A (°) | 89 | 84 | 92 | 85 |
| Rückprallelastizität (%) | 30 | 31 | 31 | 32 |

Anmerkungen zu den Tabellen

1. Styrol-Butadien-Kautschuk, harz- und fettsäurehaltig mit 23,5% gebundenem Styrol; Ruß für hohe Abriebfestigkeit. Kautschuk und Ruß werden als Masterbatch aus 100 Teilen Kautschuk und 50 Teilen Ruß verwendet.
2. Handelsüblicher Phenol-Novolak mit einem Schmelzpunkt (Kapillarmethode) von 80–88°C.
3. Methylolverbindung aus 1 Mol Harnstoff, 1,12 Mol Melamin und 10,72 Mol wäßriger Formaldehydlösung, ca. 39%ig, hergestellt durch Kondensation im alkalischen Bereich nach üblichen Verfahren und anschließende Verätherung mit 32 Mol Methanol in üblicher Weise bei pH-Werten von <3.
4. Wie Mischäther A, jedoch wurde nur mit der halben Menge Methanol veräthert.
5. In einem Zweistufenverfahren wird Harnstoff mit der achtfachen Molmenge wäßriger Formaldehydlösung (ca. 39%ig) bei pH-Werten von >10 nach üblichem Verfahren umgesetzt. Dem Reaktionsgemisch werden 10 Mol-% Melamin, bezogen auf Mole (Gesamtformaldehyd −4) hinzugefügt.

6

Das resultierende Reaktionsgemisch wird weitgehend eingeengt und mit 20 Mol Methanol, bezogen auf die Summe von Molen Melamin und Harnstoff, unter üblichen Bedingungen veräthert und anschließend auf einen Wassergehalt von <1% eingestellt.

6. Umsetzungsprodukt von Harnstoff mit 3 Mol Formaldehyd, teilveräthert; Viskosität ca. 10 Pa · s bei 25° C, bezogen auf einen Festkörpergehalt von 98,8% bei 1 h 50° C im Vakuum; hergestellt nach üblichem Verfahren.

7. Nach dem SMR-Verfahren hergestellte Sheet-Qualität mit einem Anteil an flüchtigen Bestandteilen von max. 0,8% und einem Glührückstand von max. 0,6%.

8. Gleiche Type wie in den Beispielen 1 bis 6, aber getrennte Einarbeitung.

9. Handelsüblicher Phenol-Novolak mit einer dyn. Viskosität DIN 53 177 bei 20° C, 40% in Monoäthylenglykolmonoäthyläther, von 170—250 mPa . s.

10. Dimethylolharnstoffdimethyläther (vergleiche Houben-Weyl, Band XIV/1 (1963), Seite 348, Beispiel 4), als 70%iges rieselfähiges Pulver, hergestellt durch Aufziehen des flüssigen Harzes auf eine Kieselsäure mit einer spez. Oberfläche von 190 m²/g und einer mittleren Größe der Primärteilchen von 18 · 10⁻⁹m.

11. Siehe 6., aber als 70%iges rieselfähiges Pulver gemäß 10.


## Diskussion der Ergebnisse

Die Beispiele 1 bis 6 zeigen die Ergebnisse, die mit einer üblichen Kautschukmischung auf der Basis eines Styrol-Butadien-Kautschuks und unter Verwendung eines handelsüblichen Phenolnovolaks und der erfindungsgemäßen Aminoplastverbindungen als Härtungsmittel erhalten werden. Der Verstärkungseffekt wird durch den Vergleich mit einem Vulkanisat ohne Zusatz der erfindungsgemäß beanspruchten Phenolnovolak-Aminoplast-Kombination demonstriert.

Beispiele 1 und 2 zeigen den Verstärkungseffekt mit Melamin-Harnstoff-Mischäthern als Härter, in denen im Verhältnis zum Melamin ein geringerer Harnstoffanteil vorliegt, wobei der Äther gemäß Beispiel 2 schwächer veräthert ist.

Beispiele 4 und 6 zeigen im Vergleich zu Beispielen 3 und 5 die Steigerung der Härte und der Spannungswerte und damit den guten Verstärkungseffekt durch Mitverwendung einer Säure.

Allen erfindungsgemäß beanspruchten Phenolnovolak-Aminoplast-Kombinationen ist gemeinsam, daß sie Kautschukmischungen deutlich verstärken. Dies ist aus den erhöhten Spannungswerten, insbesondere bei geringer Dehnung, und den deutlich, in der Regel um 14—18 Punkte erhöhten Härtegraden der Vulkanisate ersichtlich. Dies gilt auch für andere Kautschukmischungen, z. B. Naturkautschukmischungen (vgl. Beispiele 9 bis 12).

Die Ergebnisse zeigen, daß mit den erfindungsgemäß vorgeschlagenen Novolak-Aminoplast-Verbindungen Verstärkungseffekte erzielt werden, die unter gleichen Verhältnissen mit Hexamethylentetramin als Härtungsmittel erreichbar sind, die jedoch nicht die mit der Verwendung des Hexamethylentetramins verbundenen Nachteile aufweisen. So kann z. B. keine intermediäre Ammoniakbildung auftreten. Damit sind etwaige Metalleinlagen keiner dadurch bedingten Korrosion bzw. Verminderung der Haftfestigkeit am Kautschuk unterworfen.


## Patentansprüche

1. Verfahren zur Herstellung von verstärkten Vulkanisaten durch Vulkanisation von Mischungen aus Natur- oder synthetischem Dienkautschuk mit Novolakharzen in Gegenwart reaktiver Melaminharze, die als Härter für das Novolakharz wirken und durch Umsetzung von 1 Mol Melamin mit 0,5 bis 6 Mol Aldehyd erhalten worden sind, in einem Anteil von 0,5 bis 120 Gew.-%, bezogen auf Novolakharz, dadurch gekennzeichnet, daß anstelle von oder zusammen mit den reaktiven Melaminharzen andere hdroxylgruppenhaltige aminoplastbildende Verbindungen eingesetzt werden, die Gesamtmenge der aminoplastbildenden Verbindungen ebenfalls von 0,5 bis 120 Gew.-% beträgt, bezogen auf Novolakharz, und daß das Novolakharz im wesentlichen aus Phenol, Bisphenolen, Gemischen aus Phenol und Alkylphenolen oder solchen Phenolen, die eine Alkylgruppe mit 2 bis 12 C-Atomen tragen, und Aldehyden aufgebaut ist, wobei die Phenolkomponente noch Zusätze von Resorcin, Phenylphenol oder Polyalkylphenolen in einer solchen Menge enthalten kann, daß das Molverhältnis der Gesamtmenge dieser Zusätze zur Gesamtmenge der anderen Phenole bis 1 : 1 beträgt und wobei die Novolakharze auch mit Naturharzsäuren oder olefinisch-ungesättigten Kohlenwasserstoffen modifiziert sein können.

2. Verfahren nach Anspruch 1, dadurch gekennzeichnet, daß die aminoplastbildende Verbindung in Form solcher Äther eingesetzt wird, in denen Methylolgruppen, zumindest teilweise, mit einwertigen Alkoholen mit 1 bis 12, vorzugsweise bis 8 C-Atomen veräthert sind.

3. Verfahren nach Anspruch 1 oder 2, dadurch gekennzeichnet, daß die Menge der aminoplastbildenden Verbindung 1 bis 80, vorzugsweise 2 bis 50 Gew.-%, bezogen auf Novolakharz, beträgt.

4. Verfahren nach einem oder mehreren der Ansprüche 1 bis 3, dadurch gekennzeichnet, daß die Vulkanisation zusätzlich zu den üblicherweise als Verarbeitungshilfsmittel angewendeten Fettsäuren

in Gegenwart von anorganischen oder vorzugsweise ein- oder mehrbasischen organischen Säurekomponenten mit 2 bis 20 C-Atomen und/oder Polyestern mit einer Säurezahl von mindestens 20 durchgeführt wird.

5. Verfahren nach Anspruch 4, dadurch gekennzeichnet, daß der Anteil der organischen Säurekomponente 0,1 bis 5, vorzugsweise 1,5 bis 3 Gew.-%, bezogen auf Kautschuk, beträgt.

6. Verfahren nach einem oder mehreren der Ansprüche 1 bis 5, dadurch gekennzeichnet, daß solche Kautschuk-Mischungen vulkanisiert werden, in die der Novolak und die aminoplastbildende Verbindung wenigstens teilweise bei einer Temperatur oberhalb des Schmelzpunktes der Novolakharze, vorzugsweise bei 80 bis 100° C, eingemischt worden sind.

7. Verfahren nach einem oder mehreren der Ansprüche 1 bis 6, dadurch gekennzeichnet, daß Mischungen vulkanisiert werden, in denen die gesamte Phenolkomponente des Novolaks einen Anteil an Alkylphenol von höchstens 70 Mol-% enthält.

8. Verfahren nach einem oder mehreren der Ansprüche 1 bis 7, dadurch gekennzeichnet, daß Mischungen vulkanisiert werden, deren Novolak-Anteil 1 bis 30, vorzugsweise 3 bis 20 Gew.-%, bezogen auf Kautschuk, ausmacht.

9. Verfahren nach einem oder mehreren der Ansprüche 1 bis 8, dadurch gekennzeichnet, daß der Vulkanisation geformte Mischungen unterworfen werden, die noch metallische Verstärkungselemente enthalten.

10. Gummiartikel und Kraftfahrzeugreifen, hergestellt nach dem Verfahren eines oder mehrerer der Ansprüche 1 bis 9.


## Claims

1. Process for the preparation of reinforced vulcanisates by vulcanisation of compositions comprising natural rubber or synthetic diene rubber with novolak resins in the presence of reactive melamine resins which act as hardeners for the novolak resin and have been obtained by reaction or 1 mol of melamine with 0.5 to 6 mols of an aldehyde, in an amount of from 0.5 to 120% by weight, based on the novolak resin, characterized in that, instead of or together with the reactive melamine resins, other aminoplast-forming compounds containing hydroxyl groups are used, the total quantity of the aminoplastforming compounds is also from 0.5 to 120% by weight, based on the novolak resin, and that the novolak resin is substantially derived from phenol, bisphenols, mixtures of phenol and alkylphenols or such phenols which contain an alkyl group having from 2 to 12 carbon atoms, and aldehydes, wherein the phenol component may further contain additions of resorcinol, phenylphenol or polyalkylphenols in such an amount that the molar ratio of the total amount of these additions to the total amount of the other phenols is up to 1 : 1 and wherein the novolak resins may also be modified with natural resinic acids or olefinically unsaturated hydrocarbons.

2. Process according to claim1, characterized in that the aminoplast-forming compound is used in the form of ethers in which methylol groups are at least partially etherified with monohydric alcohols having 1 to 12, preferably up to 8 carbon atoms.

3. Process according to claim 1 or 2, characterized in that the amount of aminoplast-forming compound is 1 to 80, preferably 2 to 50% by weight, based on the novolak resin.

4. Process according to one or more of claims 1 to 3, characterized in that the vulcanisation is carried out in the presence of inorganic acid components or preferably mono- or dibasic organic acid components having 2 to 20 carbon atoms and/or polyesters with an acid number of at least 20, used in addition to the fatty acids used conventionally as processing auxiliary agents.

5. Process according to claim 4, characterized in that the amount of the organic acid component is 0.1 to 5, preferably 1.5 to 3% by weight, based on the rubber.

6. Process according to one or more of claims 1 to 5, characterized in that a rubber composition is vulcanised to which the novolak and the aminoplast-forming compound have at least partially been blended at a temperature above the melting point of the novolak resins, preferably at 80 to 100° C.

7. Process according to one or more of claims 1 to 6, characterized in that a composition is vulcanised in which the total phenolic component of the novolak contains an amount of at most 70 mol-% of alkylphenol.

8. Process according to one or more of claims 1 to 7, characterized in that a composition is vulcanised in which the amount of novolak is 1 to 30, preferably 3 to 20% by weight, based on the rubber.

9. Process according to one or more of claims 1 to 8, characterized in that moulded compositions containing metal reinforcing elements are vulcanised.

10. Rubber articles and vehicle tyres, produced by a process according to one or more of claims 1 to 9.

**Revendications**

1. Procédé pour préparer des produits vulcanisés renforcés, par vulcanisation de mélanges d'un caoutchouc diénique naturel ou synthétique avec des résines novolaques, en présence de résines de mélamine réactives qui agissent comme durcisseurs pour la résine novolaque et qui ont été obtenues par réaction de 1 mole de mélamine avec de 0,5 à 6 moles d'un aldéhyde, en une proportion de 0,5 à 120% en poids par rapport à la résine novolaque, procédé caractérisé en ce qu'au lieu des résines de mélamine réactives ou en association avec celles-ci on utilise d'autres composés hydroxylés générateurs d'aminoplastes, la quantité totale des composés générateurs d'aminoplastes étant, là encore, comprise entre 02 et 120% en poids par rapport à la résine novolaque, et en ce que la résine novolaque est essentiellement constituée d'aldéhydes et de phénol, de bis-phénols, de melanges de phénol et d'alkyl-phénols ou de phénols porteurs d'un radical alkyle en $C_2-C_{12}$, la composante phénolique pouvant en plus contenir du résorcinol, du phénylphénol ou des polyalkyl-phénols en une quantité telle que le rapport molaire de la quantité totale de ces additifs à la quantité totale des autres phénols soit d'au plus 1 : 1, et les résines novolaques pouvant également être modifiées par des acides résiniques naturels ou par des hydrocarbures éthyléniques.

2. Procédé selon la revendication 1 caractérisé en ce que le composé générateur d'aminoplastes est mis en jeu sous la forme d'éthers dans lesquels des radicaux méthyloliques sont éthérifiés, au moins partiellement, par des mono-alcools contenant de 1 à 12 atomes de carbone, de préférence de 1 à 8.

3. Procédé selon l'une des revendications 1 et 2, caractérisé en ce que la quantité du composé générateur d'aminoplastes est de 1 à 80%, de préférence de 2 à 50% en poids, par rapport à la résine novolaque.

4. Procédé selon l'une quelconque des revendications 1 à 3, caractérisé en ce que la vulcanisation est effectuée, non seulement en présence des acides gras ordinairement utilisés comme adjuvants de mise en oeuvre, mais encore en présence de composantes acides minérales ou, mieux, de composantes acides organiques mono- ou poly-acides contenant de 2 à 20 atomes de carbone et/ou de polyesters ayant un indice d'acide d'au moins 20.

5. Procédé selon la revendication 4, caractérisé en ce que la proportion de la composante acide organique est de 0,1 à 5% en poids, de préférence de 1,5 à 3% en poids, par rapport au caoutchouc.

6. Procédé selon l'une quelconque des revendications 1 à 5, caractérisé en ce qu'on vulcanise des mélanges pour caoutchouc dans lesquels la novolaque et le composé générateur d'aminoplastes ont été incorporés, au moins partiellement, à une température supérieure au point de fusion des résines novolaques, de préférence à une température comprise entre 80 et 100° C.

7. Procédé selon l'une quelconque des revendications 1 à 6, caractérisé en ce qu'on vulcanise des mélanges dans lesquels l'ensemble de la composante phénolique de la novolaque a une teneur en alkyl-phénol d'au plus 70% en moles.

8. Procédé selon l'une quelconque des revendications 1 à 7, caractérisé en ce qu'on vulcanise des mélanges de 1 à 30% en poids, de préférence de 3 à 20% en poids, par rapport au caoutchouc.

9. Procédé selon l'une quelconque des revendications 1 à 8, caractérisé en ce qu'on soumet à la vulcanisation des mélanges moulés qui contiennent en outre des éléments de renforcement métalliques.

10. Objets en caoutchouc et pneus de véhicules automobiles qui ont été fabriqués par un procédé selon l'une quelconque des revendications 1 à 9.